# EUROPÄISCHE PATENTSCHRIFT

(11) **EP 0 894 986 B1**
(45) Veröffentlichungstag und Bekanntmachung des Hinweises auf die Patenterteilung: **30.06.2004**
(21) Anmeldenummer: 98113746.6
(22) Anmeldetag: 23.07.1998
(51) Int. Cl.: F16B 19/10, B21J 15/04

(54) **Blindniet**
Blind rivet
Rivet aveugle

(30) Priorität: 29.07.1997 DE 19732517
(43) Veröffentlichungstag der Anmeldung: 03.02.1999
(73) Patentinhaber: Richard Bergner GmbH & Co, 91126 Schwabach (DE)
(72) Erfinder:
(74) Vertreter: Tergau & Pohl Patentanwälte

(56) Entgegenhaltungen:
- EP-A- 0 448 993
- DE-U- 29 709 167
- GB-A- 2 202 293
- US-A- 5 429 464

## Beschreibung

Die Erfindung betrifft einen Blindniet gemäß dem Oberbegriff des Patentanspruchs 1. Desweiteren bezieht sie sich auf ein Verfahren zur Herstellung einer Blindnietverbindung gemäß dem Oberbegriff des Patentanspruchs 9.

Ein gattungsgemäßer Blindniet ist unter der Marke HEMLOK® aus dem Katalog 125.10101.88(00.00) der Firma Avdel Verbindungselemente GmbH bekannt. Zur Herstellung einer Blindnietverbindung wird der bekannte Blindniet mit dessen Nietschaft in eine fluchtende Bohrung mehrerer flächig aufeinanderliegender Bauteile eingeführt, bis der Setzkopf auf der Bauteiloberfläche aufliegt. Nach Einsetzen des Blindniets wird der Nietdorn entgegen der Einsteckrichtung zugbeaufschlagt. Das die Blindnietverbindung herstellende Setzwerkzeug stützt sich dabei auf dem Setzkopf des Blindniets ab. Der verbreiterte Domkopf überträgt die Zugbeaufschlagung des Nietdorns auf das Freiende des Nietschaftes, welches über die dem Setzkopf abgewandte Oberfläche der Bauteile hinausragt. Infolge des mechanischen Drucks auf den Nietschaft, wird dieser zu einem sogenannten Schließkopf umgeformt. Die zur vemietenden Bauteile sind nun zwischen dem Setzkopf einerseits und den Schließkopf andererseits eingespannt und somit aneinander fixiert. Bei dem bekannten Blindniet schiebt der Dornkopf das Freiende des Nietschaftes zur Schließkopfbildung vor sich her. Dies führt zu einer Auffaltung des Nietschaftes. Der Schließkopf hat daher die Form einer Ringwulst. Bei vollständig ausgebildetem Schließkopf steigt die innerhalb des Nietdorns wirkende mechanische Spannung sprunghaft an. Dadurch reißt der Nietdorn an einer dafür vorgesehenen Sollbruchnut in einem definierten Abstand zum Domkopf ab. Zumal der bekannte Blindniet zum Vernieten von Bauteilen mit variierender Gesamtdicke verwendet wird, wird der Nietdorn in Abhängigkeit von der jeweiligen Bauteildicke stets in einer unterschiedlichen Lage bezüglich des Setzkopfendes abgetrennt. Dies ist sowohl aus optischen Gründen als auch aus Festigkeitsgründen nicht wünschenswert. Desweiteren ist bei dem bekannten Blindniet keine Arretierung des im Nietschaft verbleibenden Restdorns am Setzkopf vorgesehen. Dies führt insbesondere bei einer dynamischen Belastung zu Instabilität des bekannten Blindniets, zumal der Restdom einer Dehnung des Nietschaftes nur über Reibschluß bzw. bei Querkontraktion des Nietschaftes hemmend entgegenwirkt.

Ein weiterer Blindniet der genannten Art ist aus dem Katalog TITGEMEYER 0292 Tb1012 der Firma GEBR. TITGEMEYER GmbH & Co KG unter dem Namen HUCK® MAGNA-BULB bekannt. Bei dem genannten Blindniet weist der Domkopf einen ringförmigen Vorsprung auf, der mit Abstand zum Ende des Dornkopfes an den Mantel des Nietdorns angeformt ist. In einem definierten Abstand zum Domkopf ist der Nietdorn wiederum mit einer Sollbruchnut versehen. Zwischen dieser Sollbruchnut und dem Dornkopf ist der Nietdorn desweiteren mit einer Einkerbung versehen, deren dem Domkopf zugewandte Kante zur Bildung eines Anschlags die dem Domkopf abgewandte Kante radial überragt. Die Bildung des Schließkopfes erfolgt gemäß dem MAGNA-BULB-System wiederum durch Auffalten des Nietschaftes zu einer Ringwulst. Der nach Ausbildung des Schließkopfes erfolgende Spannungsanstieg führt hier jedoch nicht unmittelbar zum Abreißen des Nietdorns an der Sollbruchstelle. Vielmehr reißt zunächst der ringförmige Vorsprung des Domkopfes ab. Der ringartige Vorsprung schiebt sich dabei auf eine am Ende des Domkopfes vorgesehene Rändelung, welche den ringartigen Vorsprung fixiert. Ein Abreißen des Nietdorns an der Sollbruchstelle erfolgt gemäß dem MAGNA-BULB-System erst, wenn bei fortgesetztem Zug am Nietdorn der dort vorgesehene Anschlag gegen einen korrespondierenden Anschlag des Nietschaftes gedrückt wird. Die Anschläge sind derart angeordnet, daß der Nietdorn stets bündig mit dem Setzkopfende abgetrennt wird. Durch Einpressen von Setzkopfmaterial in die Einkerbung des Nietdorns wird dieser gleichzeitig am Setzkopf fixiert. In nachteiliger Weise sind jedoch der Nietdorn und der Nietschaft auf der Schließkopfseite lediglich durch einen Reibschluß fixiert. Diese Reibschlußverbindung wird insbesondere bei einer dynamischen Belastung allmählich gelockert, was zu einer Beeinträchtigung der Nietverbindung führt.

Zudem ist das Nietdornmaterial an der Abrißkante des ringförmigen Vorsprungs besonders korrosionsanfällig. Da diese Abrißkante innerhalb des Ringschaftes liegt, ist hier die Gefahr einer nicht kontrollierbaren Innenkorrosion gegeben.

Aus der DE-PS 35 21 653 ist ein Blindniet bekannt, dessen Nietdorn mit mehreren axial aneinandergereihten Sollbruchnuten versehen ist Der Setzkopf des bekannten Blindniets ist als langgestreckte Hülse ausgebildet, die im an dem Nietschaft anschließenden Bereich zu einem etwa ringförmigen Haltekragen verbreitert ist. Der Außendurchmesser des hülsenartigen Setzkopfes verjüngt sich dabei ausgehend vom Haltekragen etwa konisch zum Setzkopfende hin. Zur Herstellung der Nietverbindung wird bei dem bekannten Blindniet ein Setzwerkzeug mit einem rohrförmigen Mundstück verwendet, welches koaxial auf den hülsenförmigen Setzkopf aufgeschoben wird, bis der Setzkopf formschlüssig an der Innenwand des Mundstückes anliegt Der nach Ausbildung des Schließkopfes erfolgende Spannungsanstieg bewirkt hierbei eine weitere Verschiebung des Mundstückes gegenüber dem hülsenartigen Setzkopf, wobei das Setzkopfmaterial radial nach innen verformt wird. Das Setzkopfmaterial füllt somit die innerhalb des Setzkopfes liegenden Sollbruchnuten des Nietdorns aus und verriegelt dadurch den Nietdorn mit dem Setzkopf. Der beim Auftreffen des Mundstückes auf dem breiten Haltekragen erfolgende weitere Spannungsanstieg bewirkt ein Abreißen des Nietdorns an einer etwa bündig mit dem Setzkopfende angeordneten Sollbruchnut. Der bekannte Blindniet hat den Nachteil, daß der hülsenartige Setzkopf zwangsläufig weit über die Bauteiloberfläche hinausragt. Der bekannte Blindniet kann daher im allgemeinen nur an unzugänglichen Bauteiloberflächen verwendet werden, zumal der überstehende Setzkopf, insbesondere an einer bewegten Bauteiloberfläche, eine Verletzungsgefahr für Personen bzw. eine Beschädigungsgefahr für angrenzende Gegenstände darstellt. Ein weiterer Nachteil des bekannten Blindniets liegt darin, daß das Mundstück beim Preßvorgang starken Radialkräften ausgesetzt ist. Diese senkrecht zur Zugrichtung wirkenden Radialkräfte führen zu einer hohen Materialbelastung innerhalb des Setzwerkzeuges.

Bei einem aus der DE-GM 83 27 405 bekannten Blindniet ist der Domkopf hohl ausgebildet. Die Schließkopfbildung erfolgt hierbei nicht durch Auffaltung, sondern durch eine radiale Aufweitung des Nietschaftes. Der hohle Domkopf wird gleichzeitig komprimiert und zumindest teilweise in den Nietschaft hineingezogen. Ähnlich dem MAGNA-BULB-System wird ein bündiges Abreißen des Nietdorns sowie eine axiale Fixierung des verbleibenden Restdoms durch korrespondierende Anschläge am Setzkopf und am Nietdorn gewährleistet. In nachteiliger Weise wird insbesondere bei einer dynamischen Belastung der Nietschaft und der hohle Domkopf inelastisch verformt. Dies führt zu einer allmählichen Lockerung der Nietverbindung. Ein weiterer Nachteil des bekannten Blindniets besteht darin, daß dieser infolge des in den Nietschaft hineingezogene hohlen Dornkopfes die in den Bauteilen vorgesehene Bohrung im Querschnitt nicht vollständig ausfüllt. Dies beeinträchtigt die Stabilität der Nietverbindung bei einer Scherbelastung.

Der Erfindung liegt daher die Aufgabe zugrunde, ein Blindniet der vorbeschriebenen Art zu verbessern. Desweiteren soll ein Verfahren zur Herstellung einer verbesserten Blindnietverbindung angegeben werden.

Bezüglich des Blindniets wird diese Aufgabe erfindungsgemäß gelöst durch die Merkmale des Anspruchs 1. Danach weist der Nietdorn axial aneinandergereiht mehrere Sollbruchnuten auf, die den Durchmesser des Nietdorns ringförmig einschnüren. Die Sollbruchnuten sind dabei derart am Nietdorn angeordnet, daß bei ausgebildetem Schließkopf und infolgedessen in Richtung des Setzkopfes verschobenem Nietdorn stets eine Sollbruchnut mit dem Setzkopfende fluchtet. Infolge der Hintereinanderschaltung mehrerer Sollbruchnuten wird auf besonders einfache Weise ermöglicht, daß der Nietdorn unabhängig von der Gesamtdicke der zu vernietenden Bauteile stets bündig mit dem Setzkopfende abtrennbar ist. Vorteilhafterweise ist diese Eigenschaft des Blindniets unabhängig von der Ausbildung des Dornkopfes. Der Domkopf kann also in Anpassung an den jeweiligen Einsatzzweck des Blindniets verschieden ausgeführt sein.
Insbesondere kann dabei der Schließkopf sowohl durch Auffaltung als auch durch Aufweitung des Nietschaftes erfolgen. Die mittels des Blindniets hergestellte Nietverbindung enthält lediglich eine einzige frei zugängliche Bruchstelle, wodurch die Korrosionsgefahr - insbesondere die Gefahr einer Innenkorrosion - reduziert ist. Der Setzkopf bildet erfindungsgemäß zusammen mit dem Nietschaft im wesentlichen eine T-Form aus. Als T-förmig wird dabei jede Form verstanden, bei der der Setzkopf flach ausgebildet ist, d.h. bei der der Abstand zwischen dem Setzkopfende und dem Nietschaft kleiner als der Außendurchmesser des Nietschaftes ist, und bei der am Setzkopfende eine etwa Nietdorn senkrechte Stützfläche als Anlage für das Mundstück eines Setzgerätes ausgebildet ist Infolge der flachen T-Form ragt der Setzkopf nur gering über die Bauteiloberfläche hinaus, wodurch eine Verletzungsgefahr an der vernieteten Bauteiloberfläche vermieden ist Besonders vorteilhaft ist in diesem Zusammenhang eine kugelabschnittartige, d.h. konvex gekrümmte, Formgebung des Setzkopfes gemäß Anspruch 2 oder ein als Senkkopf ausgebildeter Setzkopf gemäß Anspruch 3. Der Setzkopf bildet auf diese Weise mit dem angrenzenden Bauteil eine annähernd glatte Oberfläche aus.

Erfindungsgemäß nimmt die Nuttiefe, d.h. die Differenz zwischen dem Außenradius des Nietdorns und dessen Sollbruchradius im Bereich einer jeden Sollbruchnut, in Richtung des Domkopfes von Sollbruchnut zu Sollbruchnut zu. Anders ausgedrückt: Die dem Domkopf nächstliegende Sollbruchnut ist am stärksten eingekerbt, wobei die Stärke der Einkerbung bei jeder darauf folgenden Sollbruchnut abnimmt. Auf diese Weise wird wirkungsvoll verhindert, daß der Nietdorn ungewollt an einer über das Setzkopfende hinausragenden Sollbruchnut abreißt. Der gleiche Vorteil wird zusätzlich oder alternativ mittels einer Anordnung von Sollbruchnuten erzielt, deren Ausrundungsradius im Scheitel in Richtung des Domkopfes von Sollbruchnut zu Sollbruchnut abnimmt. Die Sollbruchnuten sind somit in Richtung des Domkopfes zunehmend scharfkantig ausgebildet Mittels einer solchen scharfkantigen Sollbruchnut wird im Scheitel dieser Sollbruchnut eine hohe Kerbwirkung, d. h. eine hohe Kraftkonzentration, erzielt, wodurch an dieser Stelle ein Abriß des Nietdornes begünstigt wird. Der gleiche Effekt wird auch mit einer Anordnung von Sollbruchnuten erzielt, bei der der Öffnungswinkel der Sollbruchnuten in Richtung des Domkopfes von Sollbruchnut zu Sollbruchnut abnimmt, d. h. die Sollbruchnuten in Richtung des Domkopfes zunehmend eng ausgebildet sind.

In einer bevorzugten Ausführung gemäß Anspruch 4 ist der Domkopf formstabil ausgeführt und liegt am Freiende des Nietschaftes formschlüssig an. Infolge der formstabilen Ausführung des Domkopfes bleibt dieser während des Nietvorgangs unverändert. Insbesondere bleibt dadurch auch bei ausgebildetem Schließkopf der stabile Formschluß zwischen dem Domkopf und dem Nietschaft erhalten. Eine besonders stabile Nietverbindung, insbesondere bezüglich einer Scherbelastung, wird nach Anspruch 5 dadurch erzielt, das der Nietdorn aus Vollmaterial besteht.

Gemäß Anspruch 6 sind die Sollbruchnuten derart am Nietdorn angeordnet, daß sich nach dem Nietvorgang, d.h. nach Ausbildung des Schließkopfes mindestens eine Sollbruchnut innerhalb des Setzkopfes befindet. Durch Einpressen von Setzkopfmaterial in diese Sollbruchnut kann der Nietdorn vorteilhafterweise nach Art eines Hinterschnitts am Setzkopf fixiert werden. Diese Sollbruchnut erfüllt somit in integraler Weise die Funktion einer Fixierungsnut. Ein entscheidender Vorteil der Erfindung besteht darin, daß jede Sollbruchnut als Fixierungsnut dienen kann. Es gibt somit mehrere mögliche Anordnungen des Nietdorns bezüglich des Setzkopfes, in denen eine gegenseitige Verriegelung möglich ist Auf diese Weise wird auch bei variierender Gesamtdicke der zu vernietenden Bauteile der Formschluß zwischen Nietdorn und Setzkopf stets in derselben Position bezüglich des Setzkopfes hergestellt

In einer vorteilhaften Ausführungsform gemäß Anspruch 7 weist der Setzkopf an dessen Setzkopfende einen Fließbereich auf, der bereits einer vergleichsweise geringen Einpreßkraft verformt wird. Die leichte Verformbarkeit des Fließbereiches kann dabei sowohl durch eine geeignete Geometrie des Setzkopfes im Fließbereich als auch mittels einer entsprechenden Behandlung des Setzkopfmaterials im Fließbereich erzeugt werden. Beispielsweise kann der Setzkopf im Fließbereich durch eine partielle Wärmebehandlung weichgeglüht sein.

Zusätzlich oder alternativ zu einem mit dem Setzkopf einstückig ausgebildeten Schließbereich ist gemäß Anspruch 8 eine den Nietdorn koaxial umgebende Einpreßhülse vorgesehen, die nach einem Einpreßvorgang eine besonders stabile formschlüssige Verbindung zwischen dem Nietdorn und dem Setzkopf vermittelt. In dieser Ausführungsform ist der Blindniet besonders kostengünstig herzustellen. Zu dem kann durch einen einfachen Austausch der Einpreßhülse der Blindniet bei ansonsten baugleichen Bestandteilen einfach an verschiedene Anforderungen angepaßt werden.

Bezüglich des Verfahrens wird die Aufgabe erfindungsgemäß gelöst durch die Merkmale des Patentanspruchs 9. Dabei wird ein Setzwerkzeug mit dessen Mundstück auf die zum Nietdorn senkrechte Stützfläche am Setzkopfende des Blindniets im wesentlichen plan aufgelegt. Nach Ausbildung des Schließkopfes wird mittels der vom Mundstück auf den Setzkopf übertragenen axialen Kraft der Setzkopf derart verformt, daß das Setzkopfmaterial in mindestens eine innerhalb des Setzkopfes liegende Sollbruchnut eingepreßt wird. Danach wird der Nietdorn an einer mit dem Setzkopfende fluchtenden Sollbruchnut abgetrennt.

Mittels des Verfahrens wird unabhängig von der Gesamtdicke der zu vernietenden Bauteile stets ein mit dem Setzkopfende bündiger Abschluß des im Blindniet verbleibenden Restdoms sowie eine Verriegelung des Restdorns am Setzkopf erzielt. Dies gewährleistet eine besonders gute Tragfähigkeit der Nietverbindung, zumal der Nietschaft über dessen gesamte axiale Länge mit dem Restdom ausgefüllt ist. Weiterhin wird dadurch die Korrosionsanfälligkeit der Nietverbindung verringert. Das Verfahren ermöglicht die Verwendung eines Blindniets mit einem T-förmig an den Nietschaft angesetzten flachen Setzkopf. Ein besonderer Vorteil des Verfahrens liegt darin, daß das Mundstück des Setzgerätes lediglich axial wirkenden Kräften ausgesetzt ist. Die zum Setzen der Nietverbindung aufgebrachte Kraft wird so besonders günstig zur Herstellung der Nietverbindung umgesetzt Insbesondere werden auf das Mundstück des Setzgerätes keine oder nur geringe Radialkräfte ausgeübt.

Mit dem Einpreßvorgang wird vorteilhafterweise eine Doppelfunktion erzielt. So ist der Nietdorn einerseits gegen eine Bewegung in Einschubrichtung fixiert und verhindert so eine allmähliche Lockerung der Nietverbindung. Andererseits wird mittels des eingepreßten Setzkopfmaterials der in Einsteckrichtung hinter der Einpreßstelle angeordnete Restdom zugentlastet. Dies führt in besonders einfacher Weise zu einem Abreißen des Nietdorns an der bündig mit dem Setzkopfende abschließenden und somit direkt an die Einpreßstelle angrenzenden Sollbruchnut.

Vorteilhafterweise wird gemäß Anspruch 10 der Zeitpunkt des Einpreßvorgangs relativ zur Bildung des Schließkopfes sowie die Menge des eingepreßten Setzkopfmaterials anhand der zum Einpressen erforderlichen Kraft eingestellt. Diese Einpreßkraft ist bestimmt durch die Materialeigenschaft des Setzkopfmaterials sowie durch die Form des Fließbereiches oder der Einpreßhülse. Durch Variation des Zeitpunkts des Einpreßvorgangs kann die Nietverbindung besonders gut dem jeweiligen Einsatzzweck angepaßt werden. Insbesondere läßt sich hierdurch die maximale Spannung einstellen, mit der die Nietverbindung die Bauteile beaufschlagt

Zusätzlich oder alternativ dazu wird gemäß Anspruch 11 der Zeitpunkt des Einpreßvorgangs sowie die Menge des eingepreßten Setzkopfmaterials mittels eines austauschbaren Mundstücks des die Nietverbindung herstellenden Setzwerkzeugs eingestellt. Dies ist besonders vorteilhaft, zumal hiermit unabhängig von der Ausführung des Blindniets die Eigenschaften der Nietverbindung variabel sind. Beispielsweise kann zum Vemieten druckempfindlicher Materialien ein Mundstück verwendet werden, welches den Einpreßvorgang zu einem vergleichsweise frühen Zeitpunkt relativ zur Ausbildung des Schließkopfes auslöst und somit den von der Nietverbindung auf die Bauteile ausgeübten Druck auf ein geringes Maß beschränkt. Eine Verriegelung des Domkopfes unter Vorspannung (Anspruch 12) erhöht die Stabilität der Nietverbindung.

Die mit der Erfindung erzielten Vorteile bestehen insbesondere darin, daß ein bündiger Abschluß des Restdorns auf Höhe des Setzkopfendes ohne einen aufwendigen Umformmechanismus bei der Schließkopfbildung oder einen aufwendigen umformbaren Domkopf erreicht wird. Desweiteren kann eine Vielzahl auf dem Markt existenter Blindniete mit der erfindungsgemäßen Planbruchfunktion nachgerüstet werden, da diese unabhängig von der Art und Weise der Schließkopfbildung ist. In besonders vorteilhafter Ausführung weist die Blindnietverbindung einen Restdom auf, der zusätzlich zu dem bündigen Abschluß sowohl am Setzkopf als auch am Schließkopf formschlüssig fixiert ist, und so den Nietschaft nach Art eines Zugankers durchzieht. Auf diese Weise kann mittels des erfindungsgemäßen Blindniets eine Blindnietverbindung hergestellt werden, die sowohl bei einer statischen als auch bei einer dynamischen Belastung eine außerordentliche Stabilität aufweist.

Nachfolgend werden Ausführungsbeispiele der Erfindung anhand einer Zeichnung näher erläutert. Dabei zeigen:
- Fig. 1: einen Längsschnitt durch einen Blindniet in dessen Ausgangszustand,
- Fig. 2 - 6: Verfahrensschritte zur Herstellung einer Blindnietverbindung mittels eines Blindniets gemäß Fig. 1,
- Fig. 7: einen vergrößerten Längsschnitt durch eine mittels eines Blindniets gemäß Fig. 1 hergestellte Blindnietverbindung,
- Fig. 8: eine Teilansicht des Blindniets gemäß Fig. 1, jedoch mit in Richtung des Domkopfes zunehmend ausgeprägten Sollbruchnuten,
- Fig. 9: in einer Darstellung gemäß Fig. 8 eine Ausführungsform des Blindniets mit vom Domkopf weg zunehmend ausgerundeten Sollbruchnuten,
- Fig. 10: in einer Detaildarstellung X gemäß Fig. 9 eine Sollbruchnut,
- Fig. 11: in einer Darstellung gemäß Fig. 8 eine Ausführungsform des Blindniets mit zum Domkopf hin zunehmend eng ausgebildeten Sollbruchnuten,
- Fig. 12: eine Teilansicht eines Blindniets mit einem an dessen Setzkopf angeordneten lippenförmigen Fließbereich sowie ein am Setzkopf des Blindniets angesetztes Setzwerkzeug zur Herstellung einer Blindnietverbindung,
- Fig. 13: in einer Darstellung gemäß Fig. 9 ein Blindniet mit einer auf dessen Setzkopf aufgesetzten Einpreßhülse, und
- Fig. 14 u. 15: in einer Darstellung gemäß Fig. 9 die Setzmaschine mit verschiedener Ausführung des den Setzkopf des Blindniets beaufschlagenden Mundstücks.

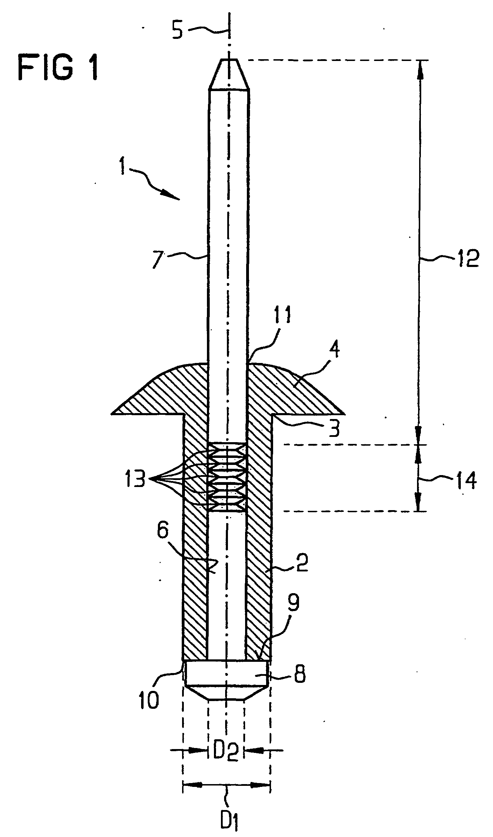

Der in Fig. 1 dargestellte Blindniet 1 umfaßt einen im wesentlichen hohlzylindrischen Nietschaft 2, der an einem Längsende 3 einstückig mit einem gegenüber dem Außendurchmesser D₁ des Nietschaftes 2 verbreiterten Setzkopf 4 ausgebildet ist. In dem dargestellten Querschnitt bildet der Nietschaft 2 mit dem Setzkopf 4 im wesentlichen eine T-Form aus. Der Setzkopf 4 ist dabei flach ausgebildet, d.h. der Abstand zwischen dem Setzkopfende 11 und dem Längsende 3 ist klein gegenüber dem Außendurchmesser des Setzkopfes 4. Bevorzugt ist der Außendurchmesser des Setzkopfes 4 mindestens doppelt so groß wie der besagte Abstand. Der Setzkopf 4 ist dabei an seiner dem Nietschaft 2 abgewandten Seite abgerundet, so daß er im wesentlichen die Form eines Kugelabschnitts (oder Kugelsegmentes) aufweist. Der Nietschaft 2 und der Setzkopf 4 sind von einer zur Längsachse 5 des Blindniets 1 koaxialen Bohrung 6 durchzogen, in welcher ein Nietdorn 7 formschlüssig einliegt. Der Nietdorn 7 ist an dessen dem Setzkopf 4 abgewandten Längsende zu einem Domkopf 8 verbreitert, der mit einer zur Längsachse 5 senkrechten ringförmigen Anlagefläche 9 formschlüssig am Freiende 10 des Nietschafts 2 anliegt. Der Durchmesser des Domkopfes 8 entspricht etwa dem Außendurchmesser D₁ des Nietschaftes 2 und übersteigt somit dessen Innendurchmesser D₂. Der Nietdorn 7 übersteht das dem Freiende 10 in Richtung der Längsachse 5 entgegengesetzte Setzkopfende 11 mit einem Zugabschnitt 12. In Richtung des Domkopfes 8 axial an den Zugabschnitt 12 anschließend ist der Nietdorn 7 mit einer Anzahl von Sollbruchnuten 13 versehen. Die Sollbruchnuten 13, die den Nietdorn 7 ringartig einschnüren, schließen dabei in dichter Folge axial aneinander an. Im in Fig. 1 dargestellten Ausgangszustand des Blindniets 1 befindet sich der von den Sollbruchnuten 13 eingenommene Nutabschnitt 14 vollständig innerhalb des Nietschaftes 2.

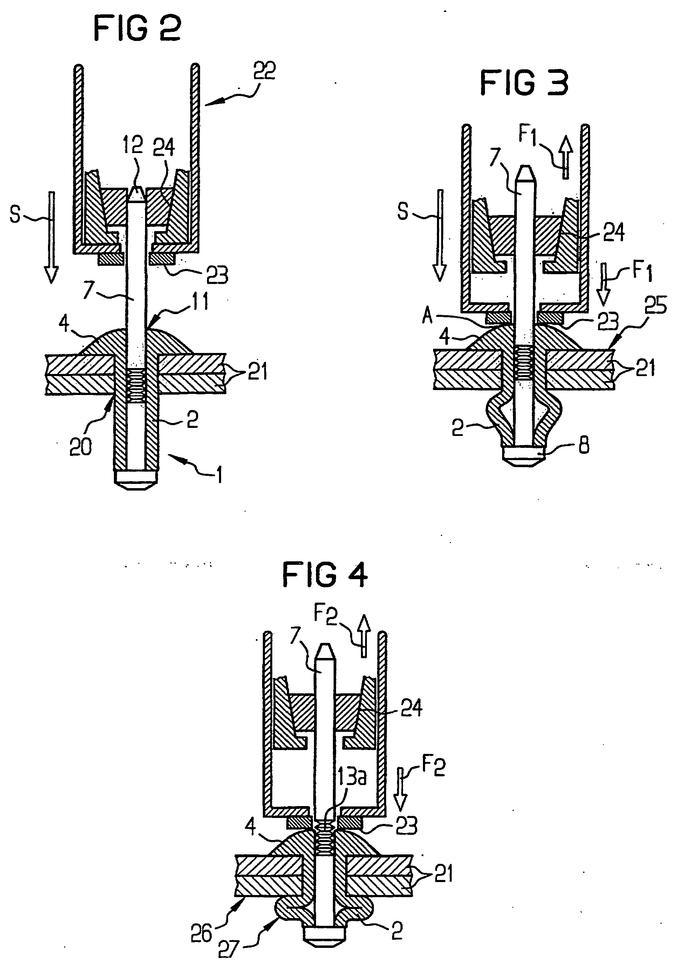

Die Herstellung einer Blindnietverbindung mittels des Blindniets 1 ist in den Figuren 2 bis 6 skizziert. Gemäß Fig. 2 wird der Blindniet 1 mit dessen Nietschaft 2 entlang einer Einsteckrichtung S in eine fluchtende Bohrung 20 zweier zu vernietender Bauteile 21 eingeführt. Danach wird ein Setzwerkzeug 22 zur Herstellung der Blindnietverbindung derart an den Blindniet 1 angesetzt, daß das Setzwerkzeug 22 mit einem den Nietdorn 7 mit Abstand umgebenden Mundstück 23 auf dem Setzkopfende 11 aufliegt. Die Fläche, mit der der Setzkopf 4 im Bereich des Setzkopfendes 11 am Mundstück 23 anliegt, wird als Stützfläche A bezeichnet Diese Stützfläche A liegt in einer zum Nietdorn 7 senkrechten Ebene, so daß der Kraftübertrag vom Mundstück 23 auf den Setzkopf 4 parallel zum Nietdorn 7 und somit parallel zur Einsteckrichtung S stattfindet. Der Zugabschnitt 12 des Nietdorns 7 wird kraftschlüssig in einer Klemmvorrichtung 24 der Setzmaschine 22 fixiert.

Während des eigentlichen Nietvorgangs gemäß Fig. 3 werden das Mundstück 23 und die Klemmvorrichtung 24 mit einer axial wirkenden Kraft F₁ auseinandergedrückt. Dabei stützt sich das Mundstück 23 auf dem Setzkopf 4 ab und preßt diesen somit gegen die Einsteckseite 25 der Bauteile 21. Der Nietdorn 7 wird mittels der Klemmvorrichtung 24 entgegen der Einsteckrichtung S verschoben und führt dadurch mittels des den Nietschaft 2 freiendseitig beaufschlagenden Dornkopfes 8 eine ringwulstartige Verformung des Nietschaftes 2 herbei.

Diese ringwulstartige Verformung des Nietschaftes 2 ist in der Darstellung gemäß Fig. 4 voll ausgebildet. Dabei liegt der verformte Nietschaft 2 flächig an der der Einsteckseite 25 entgegengesetzten Rückseite 26 der Bauteile 21 an. Die Bauteile 21 sind somit zwischen dem Setzkopf 4 und der als Schließkopf 27 bezeichneten ringwulstartigen Verformung des Nietschaftes 2 fixiert. Der Nietdorn 7 ist dabei bezüglich des Nietschaftes 2 und des Setzkopfes 4 derart verschoben, daß der Nietdorn 7 das Setzkopfende 11 innerhalb des Nutabschnitts 14 (gemäß Fig. 1) passiert. Somit schließt stets eine Sollbruchnut 13a bündig mit dem Setzkopfende 11 ab. Infolge des vollständig ausgebildeten Schließkopfes 27 wird eine weitere Verschiebung des Nietdornes 7 gehemmt. Die zwischen dem Mundstück 23 und der Klemmvorrichtung 24 wirkende Kraft steigt daher sprunghaft auf einen Betrag F₂ an.

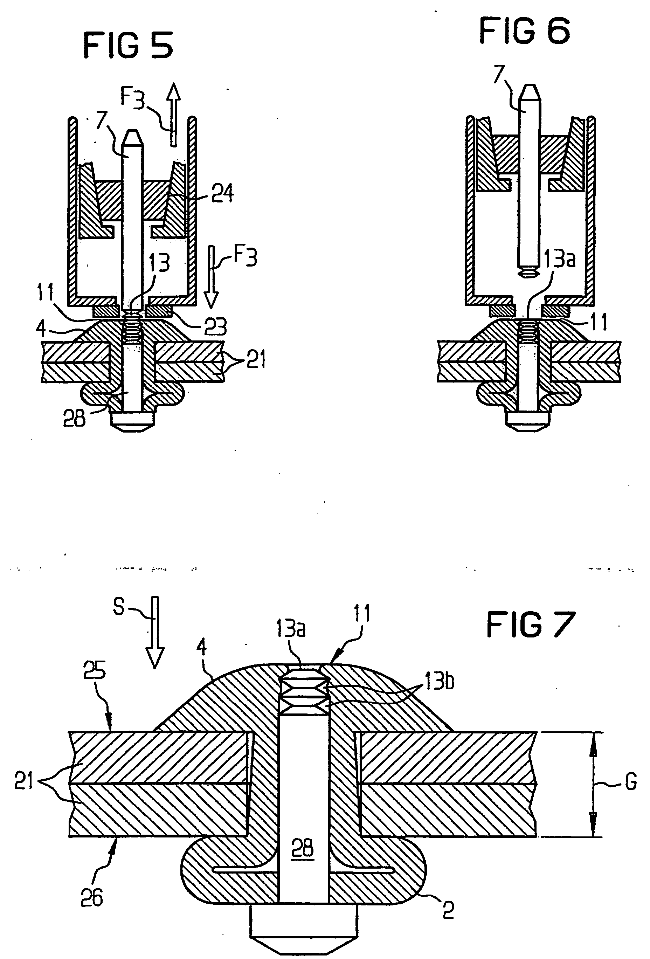

Infolge der auch als Einpreßkraft bezeichneten, erhöhten Kraft F₂ findet nunmehr gemäß Fig. 5 eine Verformung des Setzkopfes 4 mittels des Mundstücks 23 statt. Das verformte Setzkopfmaterial wird dabei in die bündig mit dem Setzkopfende 11 abschließende Sollbruchnut 13a sowie die in Einsteckrichtung S dahinterliegenden Sollbruchnuten 13b (gemäß Fig. 7) gedrückt. Auf diese Weise wird der in Einsteckrichtung S hinter der Sollbruchnut 13a gelegene Abschnitt des Nietdorns - im folgenden als Restdom 28 bezeichnet wirksam zugentlastet. Der Einpreßvorgang gemäß Fig. 5 wird beendet durch einen weiteren Anstieg der zwischen dem Mundstück 23 und der Klemmvorrichtung 24 wirkenden Kraft auf einen Betrag F₃.

Dieser weitere Kraftanstieg führt gemäß Fig. 6 zu einem Abreißen des Nietdorns 7 an der bündig mit dem Setzkopfende 11 abschließenden Sollbruchnut 13a. Die gemäß Fig. 6 vollständig hergestellte Blindnietverbindung ist in Fig. 7 vergrößert dargestellt. Darin wird insbesondere verdeutlicht, daß der Restdom 28 auf beiden Seiten 25,26 der Bauteile 21 formschlüssig mit dem Nietschaft 2 bzw. dem Setzkopf 4 verbunden ist und somit die Blindnietverbindung nach Art eines Zugankers stabilisiert. Die Sollbruchnuten 13b wirken dabei als Fixierungsnuten.

Einer Zusammenschau der Figuren 1 bis 7 ist zu entnehmen, daß die Dimensionierung des Blindniets 1 gemäß Fig. 1 mit den Parametern des Verfahrens gemäß Fig. 2 korreliert ist. So ist die axiale Länge des Nutabschnitts 14 und dessen Anordnung relativ zum Domkopf 8 bestimmt durch die vorgegebene minimale und maximale Gesamtdicke G der Bauteile 21 sowie durch die mit der Schließkopfbildung verbundene axiale Stauchung des Nietschaftes 2. Desweiteren ist das Verhältnis der Kräfte F₁,F₂ und F₃ abhängig von der Ausbildung, d.h. der Formgebung und der Materialwahl, des Nietschaftes 2, des Setzkopfendes 11 und der Sollbruchnuten 13. Anhand der Kräfte F₁, F₂ und F₃ wird insbesondere auch die Vorspannung festgelegt, mit der die Bauteile 21 durch die Blindnietverbindung beaufschlagt werden.

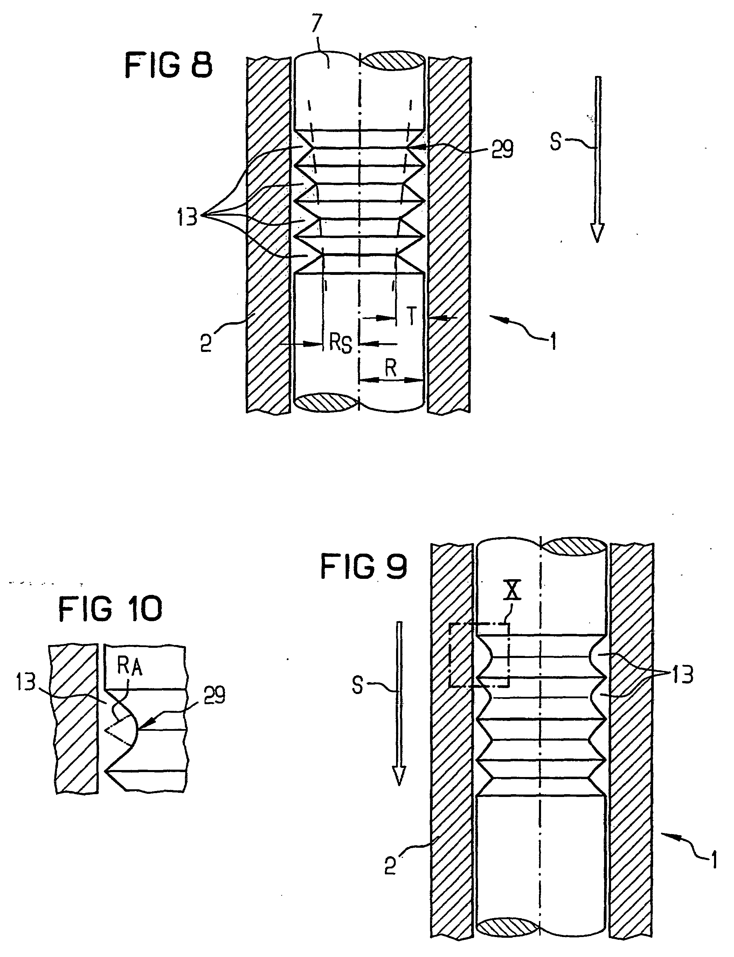

In einer Ausführungsform des Blindniets 1 gemäß Fig. 8 sind die Sollbruchnuten 13 derart ausgebildet, daß ihre Nuttiefe T in Einsteckrichtung S und damit in Richtung des (in Fig. 8 nicht dargestellten) Domkopfes 8 zunimmt. Der Begriff Nuttiefe T bezeichnet die Differenz zwischen dem Außenradius R des Nietdorns 7 und dessen Sollbruchradius R_{S} im Scheitel 29 einer jeden Sollbruchnut 13. Infolge dieser Ausbildung der Sollbruchnuten 13 nimmt die zum Bruch einer jeden Sollbruchnut 13 erforderliche Kraft F₃ in Einsteckrichtung S von Sollbruchnut 13 zu Sollbruchnut 13 ab. Die in Einsteckrichtung S letzte und somit dem Domkopf 8 nächste Sollbruchnut 13 bricht somit am leichtesten. Auf diese Weise wird eine fehlerhafte Nietverbindung, bei der der Restdorn 28 über das Setzkopfende 11 hinaussteht, verhindert. Der Bruch des Nietdorns 7 erfolgt nämlich stets an der schwächsten Stelle, d.h. in Einsteckrichtung S unmittelbar vor der durch das eingepreßte Setzkopfmaterial hergestellten Zugentlastung. Die schwächste Stelle des Nietdorns 7 ist somit stets die Sollbruchnut 13a, die bündig mit dem Setzkopfende 11 abschließt.

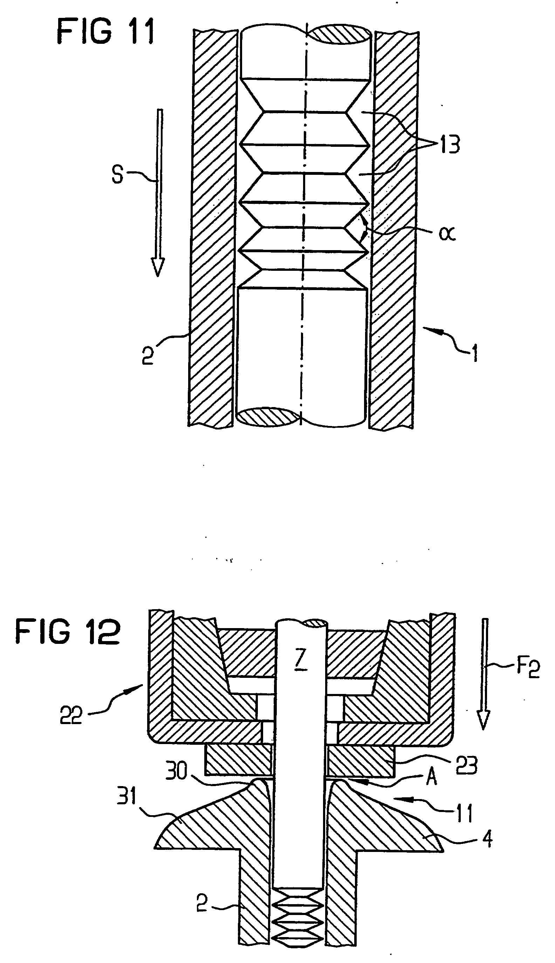

Der gleiche Effekt wird bei einer Ausführungsform des Blindniets 1 gemäß Fig. 9 erzielt. Hierbei sind die Sollbruchnuten 13 in Einsteckrichtung S zunehmend scharfkantig ausgebildet. Anders ausgedrückt: Der Ausrundungsradius R_{A} im Scheitel 29 jeder Sollbruchnut 13 nimmt in Einsteckrichtung S, d. h. zum Domkopf 8 hin, von Sollbruchnut 13 zu Sollbruchnut 13 ab. Der Ausrundungsradius R_{A} ist insbesondere der vergrößerten Darstellung gemäß Fig. 10 zu entnehmen. Eine weitere Ausführungsform des Blindniets 1, in der die Sollbruchnuten 13 zum Domkopf 8 hin zunehmend schwächer ausgebildet sind, ist in Fig. 11 dargestellt. In dieser Ausführungsform nimmt der Öffnungswinkel α der Sollbruchnuten 13 in Einsteckrichtung S von Sollbruchnut 13 zu Sollbruchnut 13 ab. Die Sollbruchnuten 13 werden somit zum Domkopf 8 hin zunehmend enger.

In einer Ausführungsform des Blindniets 1 gemäß Fig. 12 ist das Setzkopfende 11 mit einem Fließbereich 30 in Form einer lippenförmigen Auswölbung versehen. Der Fließbereich 30 wird von dem Mundstück 23 des Setzwerkzeugs 22 - wie aus Fig. 9 ersichtlich - nur in einem kleinen Flächenbereich beaufschlagt und verformt sich daher schon bei einer vergleichsweise geringen Einpreßkraft F₂. Ist infolge des Einpreßvorgangs der Fließbereich 30 flachgepreßt, so liegt das Mundstück 23 flächig auf dem breiten Körper 31 des Setzkopfes 4 auf. Eine weitere Verformung des Setzkopfmaterials erfordert eine Kraft, welche die Einpreßkraft F₂ um ein Mehrfaches übersteigt. Eine solche Umformung des Körpers 31 findet jedoch nicht statt, da bei einem Kraftanstieg auf den Betrag F₃ der Nietdorn 7 abreißt. Alternativ oder zusätzlich zu der dargestellten Ausführung kann das im Fließbereich 30 enthaltene Setzkopfmaterial gegenüber dem Material des Körpers 31 leicht verformbar ausgebildet sein. Dies kann beispielsweise durch partielles Weichglühen des Setzkopfendes 11 erreicht werden.

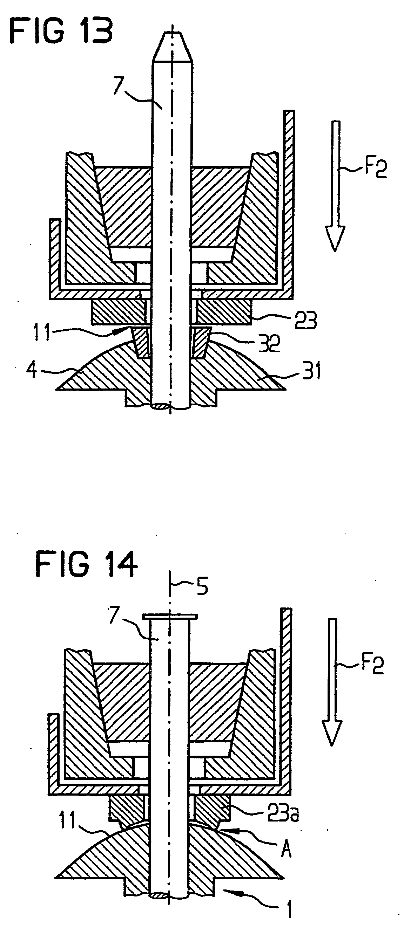

Alternativ zu einem integral mit dem Setzkopf 4 ausgebildeten Fließbereich 30 kann das zum Einpressen vorgesehene Setzkopfmaterial gemäß Fig. 13 in einer Einpreßhülse 32 enthalten sein. Die kegelstumpfförmige Einpreßhülse 32 umgibt dabei den Nietdorn 7 koaxial und liegt teilweise in einer Einkerbung des Körpers 31 des Setzkopfes 4 ein. Die Einpreßhülse 32 besteht dabei zweckmäßigerweise aus einem Material, das gegenüber dem Material des Körpers 31 leicht verformbar ist. Nach dem Einpreßvorgang vermittelt die gequetschte Einpreßhülse 32 den Formschluß zwischen dem Nietdorn 7 und dem Körper 31.

In einer vorteilhaften Weiterentwicklung des Verfahrens wird gemäß Fig. 14 eine Beeinflussung des Einpreßvorgangs im Hinblick auf den Zeitpunkt des Einpressens und die Menge des eingepreßten Setzkopfmaterials auch unabhängig von der Ausführung des Blindniets 1 ermöglicht. Der Einpreßvorgang wird hierbei anhand der Form des Mundstück 23 beeinflußt. Im Unterschied zu dem ebenen Mundstück 23 gemäß den Figuren 2-6, 12 und 13 ist das in Fig. 14 dargestellte Mundstück 23a konkav gewölbt. Die Wölbung des Mundstücks 23a ist dabei stärker gekrümmt als das Setzkopfende 11. In Analogie zu dem lippenförmigen Fließbereich 30 gemäß Fig. 12 beaufschlagt das Mundstück 23a das Setzkopfende 11 lediglich im Bereich einer schmalen ringförmigen Stützfläche A und erzielt somit eine Umformung des Setzkopfmaterials bei einer vergleichsweise geringen Einpreßkraft F₂.

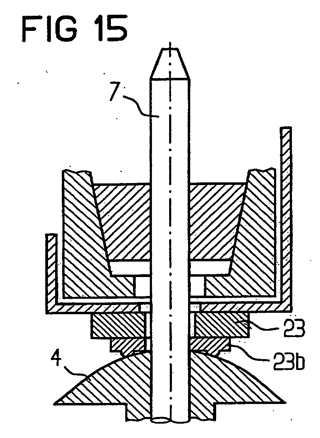

In einer Ausführung gemäß Fig. 15 ist auf einem planen Mundstück 23 gemäß den Figuren 2-6,12 und 13 ein Adaptermundstück 23b aufgesetzt, welches an dessen dem Setzkopf 4 zugewandten Seite eine konkave Wölbung aufweist Verschieden geformte Adaptermundstücke 23b sind mit geringem Aufwand gegeneinander austauschbar. Somit lassen sich auf besonders einfache Weise auch bei Verwendung baugleicher Nieten der Einpreßvorgang und dadurch wiederum die Eigenschaften der Nietverbindung variieren.

## Patentansprüche

1. Blindniet zum Verbinden mehrerer flächig aneinander anliegender Bauteile (21) mit unterschiedlicher Gesamtdicke (G)
- mit einem im wesentlichen hohlzylindrischen Nietschaft (2), der an einem Längsende (3) einstückig an einen gegenüber dem Außendurchmesser (D₁) des Nietschaftes (2) verbreiterten Setzkopf (4) anschließt sowie
- mit einem den Nietschaft (2) und den Setzkopf (4) koaxial und im Wesentlichen spielfrei durchsetzenden Nietdorn (7), der an seinem dem Setzkopf (4) abgewandten Längsende zu einem gegenüber dem Innendurchmesser (D₂) des Nietschaftes (2) verbreiterten Domkopf (8) ausgebildet ist, wobei der Setzkopf (4) zusammen mit dem Nietschaft (2) im Querschnitt im Wesentlichen eine T-Form aufweist, wobei am Setzkopfende (11) eine etwa zum Nietdorn (7) senkrechte Stützfläche (A) ausgebildet ist,
**dadurch gekennzeichnet,**
**dass** der Nietdorn (7) axial aneinandergereiht mehrere seinen Durchmesser ringförmig einschnürende Sollbruchnuten (13) aufweist, wobei die Sollbruchnuten (13) derart am Nietdorn (7) angeordnet sind, dass bei infolge des Nietvorgangs gegenüber seiner Ausgangslage in Richtung des Setzkopfes (4) verschobenem Nietdorn (7) auch bei unterschiedlichen Gesamtdicken (G) stets eine Sollbruchnut (13a) mit dem dem Nietschaft (2) abgewandten Setzkopfende (11) fluchtet und wobei die Nuttiefe (T) der Sollbruchnuten (13) in Richtung des Domkopfes (8) von Sollbruchnut (13) zu Sollbruchnut (13) zunimmt und/oder der Ausrundungsradius (R_{A}) im Scheitel (29) der Sollbruchnuten (13) in Richtung des Domkopfes (8) von Sollbruchnut (13) zu Sollbruchnut (13) abnimmt und /oder der Öffnungswinkel (α) der Sollbruchnuten (13) in Richtung des Dornkopfes (8) von Sollbruchnut (13) zu Sollbruchnut (13) abnimmt.

2. Blindniet nach Anspruch 1,
**dadurch gekennzeichnet,**
**dass** der Setzkopf (4) an der dem Nietschaft (2) abgewandten Seite etwa kugelabschnittartig abgerundet ist.

3. Blindniet nach Anspruch 1,
**dadurch gekennzeichnet,**
**dass** der Setzkopf (4) als Senkkopf ausgebildet ist.

4. Blindniet nach einem der Ansprüche 1 bis 3,
**dadurch gekennzeichnet,**
**dass** der Dornkopf (8) formstabil ausgeführt ist und am Freiende (10) des Nietschaftes (2) etwa formschlüssig anliegt.

5. Blindniet nach einem der Ansprüche 1 bis 4,
**dadurch gekennzeichnet,**
**dass** der Nietdorn (7) aus Vollmaterial besteht.

6. Blindniet nach einem der Ansprüche 1 bis 5,
**dadurch gekennzeichnet,**
**dass** die Sollbruchnuten (13) derart am Nietdorn (7) angeordnet sind, dass sich bei infolge des Nietvorgangs gegenüber seiner Ausgangslage in Richtung des Setzkopfes (4) verschobenen Nietdorn (7) mindestens eine Sollbruchnut (13b) innerhalb des Setzkopfes (4) befindet.

7. Blindniet nach einem der Ansprüche 1 bis 6,
**dadurch gekennzeichnet,**
**dass** der Setzkopf (4) einen Körper (31) und einen einstückig mit diesem am Setzkopfende (11) ausgebildeten Fließbereich (30) umfasst, wobei der Fließbereich (30) gegenüber dem Körper (31) mit geringer Einpresskraft (F₂) verformbar ist.

8. Blindniet nach einem der Ansprüche 1 bis 7,
**dadurch gekennzeichnet,**
**dass** der Setzkopf (4) einen Körper (31) und eine das Setzkopfende (11) bildende Einpresshülse (32) umfast, wobei die Einpresshülse (32) im Vergleich zum Körper (31) mit einer geringen Einpresskraft (F₂) verformbar ist, und wobei die Einpresshülse (32) den Nietdorn (7) koaxial umgibt und in einer Einkerbung des Körpers (31) zumindest teilweise einliegt.

9. Verfahren zur Herstellung einer Blindnietverbindung,
- bei dem ein Blindniet (1) mit einem endseitig einen Setzkopf (4) aufweisenden Nietschaft (2) in eine fluchtende Bohrung (20) mehrerer flächig aneinander liegender Bauteile (21) eingesteckt wird,
- bei dem mittels eines den Nietschaft (2) durchsetzenden und an dem der Einsteckseite (25) der Bauteile (21) abgewandten Ende zu einem Domkopf (8) verbreiterten Nietdorns (7) das vom Domkopf (8) beaufschlagte Freiende (10) des Nietschaftes (2) zu einem Schließkopf (27) verformt wird, so dass die Bauteile (21) zwischen dem Schließkopf (27) einerseits und dem einsteckseitig am Nietschaft (2) angeordneten Setzkopf (4) andererseits fixiert sind, und
- bei dem der den Setzkopf (4) überragende Zugabschnitt (12) des Nietdorns (7) in einem mittels einer Sollbruchnut (13) vorgegebenen Abstand vom Domkopf (8) abgetrennt wird, wobei ein Setzwerkzeug (22) mit dessen Mundstück (23,23a,23b) auf eine zum Nietdorn (7) senkrechte Stützfläche (A) des Setzkopfes (4) derart aufgelegt wird, dass das Mundstück (23,23a,23b) auf den Setzkopf (4) eine im Wesentlichen in Einsteckrichtung (S) wirkende Kraft (F₁,F₂,F₃) ausübt, wobei nach Ausbildung des Schließkopfes (27) mittels des Mundstücks (23,23a,23b) der Setzkopf (4) infolge der auf ihn in Einsteckrichtung (5) wirkenden Kraft (F₁, F₂, F₃) derart verformt wird, dass das Setzkopfmaterial in eine mit dem Setzkopfende (11) fluchtende oder innerhalb des Setzkopfes (4) liegende Sollbruchnut (13a,13b) eingepresst wird, und wobei von mehreren axial am Nietdorn (7) aneinandergereihten Sollbruchnuten (13) stets diejenige Sollbruchnut (13a) als Trennstelle für den Zugabschnitt (12) herangezogen wird, welche bei ausgebildetem Schließkopf (27) mit dem Setzkopfende (11) fluchtet, dadurch, dass die Nuttiefe (T) der Sollbruchnuten (13) in Richtung des Domkopfes (8) von Sollbruchnut (13) zu Sollbruchnut (13) zunimmt und/oder der Ausrundungsradius (R_{A}) im Scheitel (29) der Sollbruchnuten (13) in Richtung des Domkopfes (8) von Sollbruchnut (13) zu Sollbruchnut (13) abnimmt und /oder der Öffnungswinkel (α) der Sollbruchnuten (13) in Richtung des Dornkopfes (8) von Sollbruchnut (13) zu Sollbruchnut (13) abnimmt.

10. Verfahren nach Anspruch 9,
**dadurch gekennzeichnet,**
**dass** der Zeitpunkt des Einpressvorgangs relativ zum Zeitpunkt der Schließkopfbildung sowie die Menge des eingepressten Setzkopfmaterials anhand der erforderlichen Einpresskraft (F₂) eingestellt wird, wobei die Einpresskraft (F₂) mittels der Geometrie und der Werkstoffeigenschaften des Setzkopfes (4) festgelegt wird.

11. Verfahren nach Anspruch 9 oder 10,
**dadurch gekennzeichnet,**
**dass** mittels gegeneinander austauschbarer und unterschiedlich geformter Mundstücke (23a,23b) eines die Nietverbindung herstellenden Setzwerkzeugs (22) die zum Einpressen des Setzkopfmaterials erforderliche Einpresskraft (F₂) unabhängig von der Ausführung des Blindniets (1) eingestellt wird.

12. Verfahren nach einem der Ansprüche 9 bis 11,
**dadurch gekennzeichnet,**
**dass** der Nietdorn (7) unter Vorspannung zwischen dem Schließkopf (27) und dem Setzkopf (4) verriegelt wird.

## Claims

1. Blind rivet for joining a plurality of components (21) bearing against one another in a planar manner and having different overall thickness (G)
- having an essentially hollow-cylindrical rivet shank (2) which at a longitudinal end (3) integrally adjoins a primary head (4) which is wider than the outside diameter (D₁) of the rivet shank (2), and
- having a rivet mandrel (7) which passes through the rivet shank (2) and the primary head (4) coaxially and essentially free of play and which, at its longitudinal end remote from the primary head (4), is formed into a mandrel head (8) which is wider than the inside diameter (D₂) of the rivet shank (2), the primary head (4) together with the rivet shank (2) having essentially a T shape in cross section, a supporting surface (A) approximately perpendicular to the rivet mandrel (7) being formed on the primary-head end (11),
**characterized in that** the rivet mandrel (7) has a plurality of predetermined breaking grooves (13) arranged axially in a row and constricting its diameter in a ring shape, the predetermined breaking grooves (13) being arranged on the rivet mandrel (7) in such a way that, when the rivet mandrel (7) is displaced relative to its initial position in the direction of the primary head (4) as a result of the riveting operation, a predetermined breaking groove (13a) is always in alignment with the primary-head end (11) remote from the rivet shank (2), even at different overall thicknesses (G), and the groove depth (T) of the predetermined breaking grooves (13) increasing in the direction of the mandrel head (8) from predetermined breaking groove (13) to predetermined breaking groove (13), and/or the rounding radius (R_{A}) at the apex (29) of the predetermined breaking grooves (13) decreasing in the direction of the mandrel head (8) from predetermined breaking groove (13) to predetermined breaking groove (13), and/or the opening. angle (α) of the predetermined breaking grooves (13) decreasing in the direction of the mandrel head (8) from predetermined breaking groove (13) to predetermined breaking groove (13).

2. Blind rivet according to Claim 1, **characterized in that** the primary head (4) is rounded off roughly like a spherical segment on the side remote from the rivet shank (2).

3. Blind rivet according to Claim 1, **characterized in that** the primary head (4) is designed as a countersunk head.

4. Blind rivet according to one of Claims 1 to 3, **characterized in that** the mandrel head (8) is of dimensionally stable design and bears in an approximately positive-locking manner against the free end (10) of the rivet shank (2).

5. Blind rivet according to one of Claims 1 to 4, **characterized in that** the rivet mandrel (7) is made of solid material.

6. Blind rivet according to one of Claims 1 to 5, **characterized in that** the predetermined breaking grooves (13) are arranged on the rivet mandrel (7) in such a way that, when the rivet mandrel (7) is displaced relative to its initial position in the direction of the primary head (4) as a result of the riveting operation, at least one predetermined breaking groove (13b) is located inside the primary head (4).

7. Blind rivet according to one of Claims 1 to 6, **characterized in that** the primary head (4) comprises a body (31) and a flow region (30) formed in one piece with the latter on the primary-head end (11), the flow region (30) being deformable relative to the body (31) with a small press-in force (F₂).

8. Blind rivet according to one of Claims 1 to 7, **characterized in that** the primary head (4) comprises a body (31) and a press-in sleeve (32) forming the primary-head end (11), the press-in sleeve (32) being deformable with respect to the body (31) with a small press-in force (F₂), and the press-in sleeve (32) coaxially surrounding the rivet mandrel (7) and at least partly resting in a notch in the body (31).

9. Method of producing a blind riveted joint,
- in which a blind rivet (1) with a rivet shank (2) having a primary head (4) at the end is inserted into an aligned hole (20) of a plurality of components (21) bearing against one another in a planar manner,
- in which, by means of a rivet mandrel (7) passing through the rivet shank (2) and widened to form a mandrel head (8) at the end remote from the insertion side (25) of the components (21), the free end (10), acted upon by the mandrel head (8), of the rivet shank (2) is deformed to produce a closing head (27), so that the components (21) are fixed between the closing head (27) on the one hand and the primary head (4), arranged on the rivet shank (2) on the insertion side, on the other hand, and
- in which the pulling section (12), projecting above the primary head (4), of the rivet mandrel (7) is cut off at a distance from the mandrel head (8) predetermined by means of a predetermined breaking groove (13), a setting tool (22) being placed with its mouthpiece (23, 23a, 23b) onto a supporting surface (A), perpendicular to the rivet mandrel (7), of the primary head (4) in such a way that the mouthpiece (23, 23a, 23b) exerts a force (F₁, F₂, F₃) on the primary head (4), this force (F₁, F₂, F₃) acting essentially in the insertion direction (S), the primary head (4), after the forming of the closing head (27) by means of the mouthpiece (23, 23a, 23b), being deformed as a result of the force (F₁, F₂, F₃) acting on it in the insertion direction (S) in such a way that the primary-head material is pressed into a predetermined breaking groove (13a, 13b) aligned with the primary-head end (11) or lying inside the primary head (4), and, of a plurality of predetermined breaking grooves (13) arranged axially in a row on the rivet mandrel (7), that predetermined breaking groove (13a) which is in alignment with the primary-head end (11) when the closing head (27) is formed always being used as the cut-off location for the pulling section (12),
**characterized in that** the groove depth (T) of the predetermined breaking grooves (13) increases in the direction of the mandrel head (8). from predetermined breaking groove (13) to predetermined breaking groove (13), and/or the rounding radius (R_{A}) at the apex (29) of the predetermined breaking grooves (13) decreases in the direction of the mandrel head (8) from predetermined breaking groove (13) to predetermined breaking groove (13), and/or the opening angle (α) of the predetermined breaking grooves (13) decreases in the direction of the mandrel head (8) from predetermined breaking groove (13) to predetermined breaking groove (13).

10. Method according to Claim 9, **characterized in that** the instant of the press-in operation relative to the instant of the forming of the closing head and the quantity of the primary-head material pressed in are set with reference to the requisite press-in force (F₂), the press-in force (F₂) being established by means of the geometry and the material properties of the primary head (4).

11. Method according to Claim 9 or 10, **characterized in that**, by means of interchangeable and differently shaped mouthpieces (23a, 23b) of a setting tool (22) producing the riveted joint, the press-in force (F₂) required for pressing in the primary-head material is set independently of the style of the blind rivet (1).

12. Method according to one of Claims 9 to 11, **characterized in that** the rivet mandrel (7) is locked under prestress between the closing head (27) and the primary head (4).

## Revendications

1. Rivet aveugle pour relier plusieurs pièces (21) appliquées à plat les unes contre les autres et présentant des épaisseurs totales (G) différentes, comportant
- une tige de rivet (2) sensiblement cylindrique creuse qui se raccorde par une extrémité longitudinale (3) d'un seul tenant à une tête de pose (4) élargie par rapport au diamètre extérieur (D₁) de la tige de rivet (2), et
- un mandrin de rivet (7) qui traverse coaxialement et sensiblement sans jeu la tige de rivet (2) et la tête de pose (4) et qui est réalisé, à son extrémité longitudinale détournée de la tête de pose (4), en formant une tête de mandrin (8) élargie par rapport au diamètre intérieur (D₂) de la tige de rivet (2),
dans lequel la tête de pose (4) présente, conjointement avec la tige de rivet (2), une section transversale sensiblement en forme de T, une surface d'appui (A) sensiblement perpendiculaire au mandrin de rivet (7) étant réalisée à l'extrémité (11) de la tête de pose,
**caractérisé en ce que**
le mandrin de rivet (7) présente plusieurs gorges destinées à la rupture (13) disposées axialement en rangée et rétrécissant en forme annulaire son diamètre, les gorges destinées à la rupture (13) étant disposées sur le mandrin de rivet (7) de telle sorte que, lorsque le mandrin de rivet (7) est déplacé par rapport à sa position de départ en direction de la tête de pose (4) en raison de l'opération de rivetage, même à des épaisseurs totales (G) différentes, il existe toujours une gorge destinée à la rupture (13a) en alignement avec l'extrémité (11) de la tête de pose détournée de la tige de rivet (2), la profondeur (T) des gorges destinées à la rupture (13) augmente d'une gorge destinée à la rupture (13) à l'autre (13) en direction de la tête de mandrin (8), et/ou le rayon de courbure (R_{A}) au fond (29) des gorges destinées à la rupture (13) diminue d'une gorge destinée à la rupture (13) à l'autre (13) en direction de la tête de mandrin (8), et/ou l'angle d'ouverture (α) des gorges destinées à la rupture (13) diminue d'une gorge destinée à la rupture (13) à l'autre (13) en direction de la tête de mandrin (8).

2. Rivet aveugle selon la revendication 1, **caractérisé en ce que** la tête de pose (4) est arrondie approximativement en forme de portion sphérique sur le côté détourne de la tige de rivet (2).

3. Rivet aveugle selon la revendication 1, **caractérisé en ce que** la tête de pose (4) est réalisée sous forme de tête à lamage.

4. Rivet aveugle selon l'une des revendications 1 à 3, **caractérisé en ce que** la tête de mandrin (8) est réalisée solide en forme et prend appui approximativement en coopération de formes contre l'extrémité libre (10) de la tige de rivet (2).

5. Rivet aveugle selon l'une des revendications 1 à 4, **caractérisé en ce que** le mandrin de rivet (7) est constitué en matériau plein.

6. Rivet aveugle selon l'une des revendications 1 à 5, **caractérisé en ce que** les gorges destinées à la rupture (13) sont agencées sur le mandrin de rivet (7) de telle sorte qu'il se trouve au moins une gorge destinée à la rupture (13b) à l'intérieur de la tête de pose (4) lorsque le mandrin de rivet (7) est déplacé par rapport à sa position de départ en direction de la tête de pose (4) en raison de l'opération de rivetage.

7. Rivet aveugle selon l'une des revendications 1 à 6, **caractérisé en ce que** la tête de pose (4) comprend un corps (31) et une zone de fluage (30) réalisée d'un seul tenant avec celui-ci à l'extrémité (11) de la tête de pose, la zone de fluage (30) étant déformable avec une faible force d'enfoncement (F₂) par rapport au corps (31).

8. Rivet aveugle selon l'une des revendications 1 à 7, **caractérisé en ce que** la tête de pose (4) comprend un corps (31) et une douille d'enfoncement (32) formant l'extrémité (11) de la tête de pose, la douille d'enfoncement (32) étant déformable avec une faible force d'enfoncement (F₂) par comparaison avec le corps (31), et la douille d'enfoncement (32) entoure coaxialement le mandrin de rivet (7) et repose au moins partiellement dans une entaille du corps (31).

9. Procédé pour établir une jonction à rivet aveugle, dans lequel :
- on enfiche un rivet aveugle (1) par une tige de rivet (2), présentant du côté extrémité une tête de pose (4), dans un perçage (20) en alignement dans plusieurs pièces (21) appliquées à plat les unes contre les autres,
- au moyen d'un mandrin de rivet (7) qui traverse la tige de rivet (2) et qui est élargi en formant une tête de mandrin (8) à l'extrémité détournée du côté enfichage (25) des pièces (21), l'extrémité libre (10) de la tige de rivet (2), sollicitée par la tête de mandrin (8), est déformée en formant une tête de fermeture (27), de sorte que les pièces (21) sont fixées entre la tête de fermeture (27) d'une part et la tête de pose (4) agencée du côté enfichage sur la tige de rivet (2) d'autre part, et
- on sépare le tronçon de traction (12), dépassant de la tête de pose (4), du mandrin de rivet (7) vis-à-vis de la tête de mandrin (8) à une distance prédéterminée au moyen d'une gorge destinée à la rupture (13),
dans lequel :
on pose un outil de pose (22) par sa partie d'embouchure (23, 23a, 23b) sur une surface d'appui (A), perpendiculaire au mandrin de rivet (7), de la tête de pose (4) de telle sorte que la partie d'embouchure (23, 23a, 23b) exerce sur la tête de pose (4) une force (F₁, F₂, F₃) qui agit sensiblement en direction d'enfichage (S),
après formation de la tête de fermeture (27) au moyen de la partie d'embouchure (23, 23a, 23b) on déforme la tête de pose (4) en raison de la force (F₁, F₂, F₃) agissant sur celle-ci en direction d'enfichage (S) de telle sorte que le matériau de la tête de pose est enfoncé dans une gorge destinée à la rupture (13a, 13b) qui est en alignement avec l'extrémité (11) de la tête de pose ou qui se trouve à l'intérieur de la tête de pose (4), et
parmi plusieurs gorges destinées à la rupture (13), disposées en rangée axialement sur le mandrin de rivet (7), on choisit à titre d'emplacement de séparation pour le tronçon de traction (12) toujours celle des gorges destinées à la rupture (13a) qui est en alignement avec l'extrémité (11) de la tête de pose une fois que la tête de fermeture (27) est réalisée,
**caractérisé en ce que** la profondeur (T) des gorges destinées à la rupture (13) augmente d'une gorge destinée à la rupture (13) à l'autre (13) en direction de la tête de mandrin (8), et/ou le rayon de courbure (R_{A}) au fond (29) des gorges destinées à la rupture (13) diminue d'une gorge destinée à la rupture (13) à l'autre (13) en direction de la tête de mandrin (8), et/ou l'angle d'ouverture (α) des gorges destinées à la rupture (13) diminue d'une gorge destinée à la rupture (13) à l'autre (13) en direction de la tête de mandrin (8).

10. Procédé selon la revendication 9, **caractérisé en ce que** l'on choisit l'instant de l'opération d'enfoncement par rapport à l'instant de la formation de la tête de fermeture et on choisit la quantité du matériau de tête de pose enfoncé en se basant sur la force d'enfoncement nécessaire (F₂), la force d'enfoncement (F₂) étant déterminée en fonction de la géométrie et des propriétés du matériau de la tête de pose (4).

11. Procédé selon l'une ou l'autre des revendications 9 et 10, **caractérisé en ce que** l'on choisit la force d'enfoncement (F₂) nécessaire pour enfoncer le matériau de la tête de pose indépendamment de la réalisation du rivet aveugle (1) au moyen de parties d'embouchure (23a, 23b) mutuellement interchangeables et présentant des formes différentes d'un outil de pose (22) établissant la jonction de rivetage.

12. Procédé selon l'une des revendications 9 à 11, **caractérisé en ce que** le mandrin de rivet (7) est verrouillé sous précontrainte entre la tête de fermeture (27) et la tête de pose (4).
